# EUROPÄISCHE PATENTSCHRIFT

(11) **EP 0 737 333 B1**
(45) Veröffentlichungstag und Bekanntmachung des Hinweises auf die Patenterteilung: **03.09.1997**
(21) Anmeldenummer: 95903254.1
(22) Anmeldetag: 22.12.1994
(51) Int. Cl.: G05F 1/30, H05B 39/04

(54) **KONSTANTSTROMREGLER MIT AUFSPANNTRANSFORMATOR**
CURRENT STABILISER WITH STEP-UP TRANSFORMER
STABILISATEUR DE COURANT A TRANSFORMATEUR SURVOLTEUR

(30) Priorität: 23.12.1993 DE 4344286
(43) Veröffentlichungstag der Anmeldung: 16.10.1996
(73) Patentinhaber: SIEMENS AKTIENGESELLSCHAFT, 80333 München (DE)
(72) Erfinder: VONGEHR, Otto, D-91080 Marloffstein (DE)
(86) Internationale Anmeldenummer: DE9401529
(87) Internationale Veröffentlichungsnummer: WO9517707

(56) Entgegenhaltungen:
- DE-A- 1 488 269
- FR-A- 1 469 154
- US-A- 3 743 921

## Beschreibung

Die Erfindung bezieht sich auf eine Anlage zur Flugfeldbefeuerung, enthaltend einen Konstantstromregler mit Aufspanntransformator mit Einheiten zur Sollwertvorgabe und Istwerterfassung und zum Istwert-/Sollwertvergleich, wobei der Primärseite des Aufspanntransformators die Einheit zur Auswahl einer Basisspannung zugeordnet ist..

Konstantstromregler werden auf unterschiedlichsten Gebieten der Technik benötigt. Insbesondere wenn Beleuchtungen mit definierter und konstanter Helligkeit zu betreiben sind, wie bei Flugfeldbefeuerungen aber auch in Beleuchtungsanlagen von Theatern oder Fernsehstudios, werden bei vergleichsweise großen elektrischen Leistungen hohe Anforderungen an eine zeitlich konstante Stromstärke oder Spannung gestellt. Gleiches gilt im Prinzip aber auch in der Metallurgie, beispielsweise beim Betrieb von mit hoher Leistung betriebenen Öfen. Für derartige Anwendungen ist beispielsweise ein aus der FR-A-14 69 154 bekannter Regler einsetzbar.

Speziell bei Anlagen zur Flugfeldbefeuerung werden über Serienkreistransformatoren jeweils Gruppen von Befeuerungselementen mit konstanter Stromstärke betrieben. Dabei sind die einzelnen Befeuerungselemente in den Serienkreis über sogenannte Lampentransformatoren eingebunden. Sofern ein Befeuerungselement ausfällt, wird der zugehörige Lampentransformator in die Sättigung gesteuert.

Es sind bereits Konstantstromregler für derartige Anwendungszwecke bekannt, die aufgrund der geforderten elektrischen Leistungen mit Thyristorschaltungen arbeiten. Eine diesbezügliche Anlage, bei der in einem Sekundärkreis eine Vielzahl von Beleuchtungselementen mit gleicher Helligkeit betrieben werden soll, ist aus der US-A-3 743 921 bekannt. Für die Reglerschaltung mit Thyristoren ist eine Einrichtung notwendig, die den Zündpunkt der einzelnen Thyristoren überwacht und einstellt. Dabei wird insbesondere das bekannte- Prinzip-der Phasenanschnittsteuerung ausgenutzt und der Primärseite des Serienkreistransformators über die Thyristorschaltung die geforderte Leistung zugeführt. Der notwendige Istwert-/Sollwertvergleich wird jeweils über einen sekundärseitigen Strommesser und Rückkopplung auf die Primärseite mit Sollwertgeber zwecks Aktivierung des Reglers betrieben.

Aufgabe der Erfindung ist es demgegenüber, eine verbesserte Anlage zur Flugfeldbefeuerung anzugeben.

Die Aufgabe ist erfindungsgemäß bei einer Anlage der eingangs genannten Art dadurch gelöst, daß mittels einer primären Teilwicklung des Aufspanntransformators oder eines separaten Transformators mit Primär- und Sekundärwicklung eine auf die Basisspannung aufgesetzte Leistung erzeugt wird und daß ein Schaltreglermodul nur die auf die Basisspannung aufgesetzte Leistung regelt, wozu das Schaltreglermodul über eine Transistorschaltung die primäre Teilwicklung des Aufspanntransformators oder die primäre wicklung des separaten Transformators mit Primär- und Sekundärwicklung ansteuert.

Bei der Erfindung sind die Mittel zum Istwert-/Sollwertvergleich vorzugsweise digitale Schaltmittel. Vorteilhafterweise kann nunmehr das Schaltregler-Modul die Primärwicklung des Aufspanntransformators dicht über die Transistorschaltung ansteuern, da nur vergleichsweise kleine Leistungen, beispielsweise 5 bis 20 % der Gesamtleistung, geregelt werden.

Besonders vorteilhaft ist bei der Erfindung, daß annähernd keine Oberwellenrückführung in das Netz auftritt. Im Gegensatz zum Stand der Technik ist keine Drossel für den Serienkreistransformator zwingend notwendig. Die Ladung der Kabelkapazität erfolgt mit einem Sinusstrom, so daß die bisher beobachteten Resonanzerscheinungen im Strom nicht mehr auftreten.

Der Konstantstromregler der erfindungsgemäßen Anlage ist vorzugsweise so konzipiert, daß die Reglerendstufe nur für etwa ein Zehntel der Gesamtleistung ausgelegt wird, wodurch nur etwa ein Zehn tel Verlustleistung entsteht. Bei Reglerausfall tritt dementsprechend im Serienkreis allenfalls 10 % weniger Strom auf.

Insgesamt ist also nur ein Regler für kleine Leistungen erforderlich. Bei großen Leistungen können vorteilhafterweise mehrere erfindungsgemäß ausgebildete Regler parallelgeschaltet werden.

Weitere Einzelheiten und Vorteile der Erfindung ergeben sich aus der nachfolgenden Figurenbeschreibung eines Ausführungsbeispiels. Es zeigen in schematischer Darstellung
- Figur 1: die Schaltung eines Reglers,
- Figur 2: einen Ausschnitt der mit dem Regler gemäß Figur 1 am Aufspanntransformator erzeugten Spannungen und
- Figur 3: die zugehörigen Ausgangsspannungen über eine Periode.

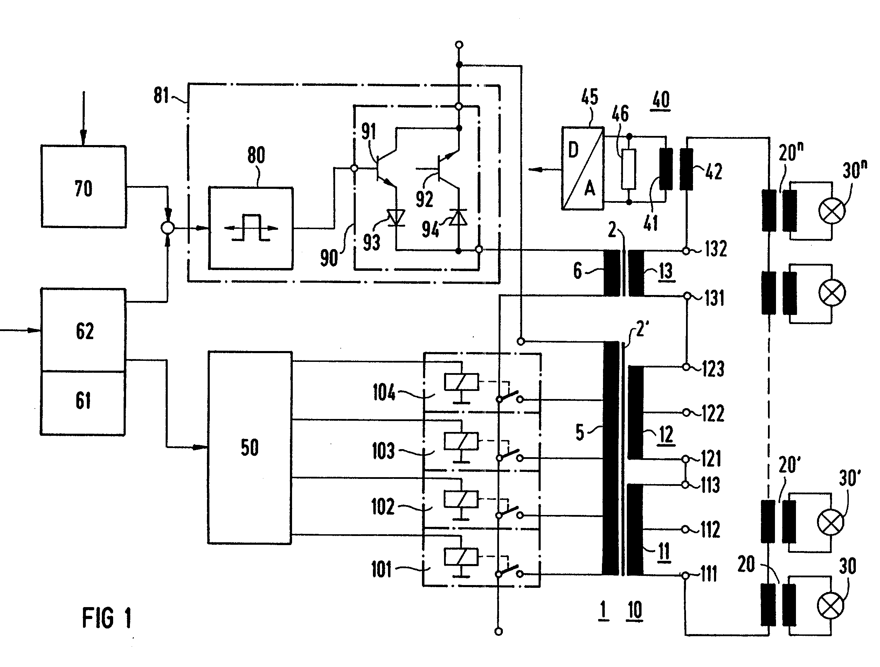

In Figur 1 ist ein Serienkreistransformator gezeigt, der primärseitig wenigstens eine Wicklung 1 und sekundärseitig eine Anordnung 10 aus mehreren Teilwicklungen aufweist. Dazwischen ist ein Metalljoch 2 bzw. 2' mit Dynamoblechen vorhanden. Im einzelnen sind beispielsweise Primärwicklungen 5 und 6 sowie Sekundärwicklungen 11, 12 und 13 mit jeweiligen Ausgängen 111 bis 113, 121 bis 123 und 131 bzw. 132 dargestellt.

Letztere Anordnung soll zum Betrieb einer Flugfeldbefeuerungsanlage verwendet werden. Der Transformator 1, 2, 10 bildet entweder eine Einheit mit einem einzigen Joch oder kann aus zwei getrennten, primär parallel und sekundär in Reihe geschalteten Transformatoren bestehen, was in Figur 1 verdeutlicht wird.

An die Ausgänge sind jeweils Gruppen von Befeuerungselementen angeschlossen, beispielsweise die Befeuerungselemente 30, 30' .., 30". Jedes Befeuerungselement 21 hat einen ihm zugeordneten Lampentransformator 20, 20', .., 20". Zur Verwendung in Flugplatzbefeuerungen ist wesentlich, daß bei Netzschwankungen, die in der Größe von 10 bis 15 % liegen können, konstante Helligkeit aller Elemente gewährleistet ist. Dafür ist eine geeignete Regelung der Eingangsspannung des Transformators 1, 2, 10 notwendig.

In Figur 1 ist weiterhin ein Istwertgeber 40 vorhanden, der im Prinzip aus einem Stromwandler mit zwei Wicklungen 41 und 41 und einem nachgeschalteten A/D-Wandler 45 mit zugehörigem Widerstand 46 besteht. Über den A/D-Wandler 45 werden Istwertsignale digital oder analog in den Regler auf der Primärseite des Transformators 1, 2, 10 zurückgekoppelt.

Der Regler selbst besteht aus einem Regelkreis mit zugehörigen Steuereinheiten, mit denen die Primnärseite des Transformators 1, 2, 10 angesteuert wird. Der Wicklung 5 ist einer Einheit 50 für eine Stufengrobauswahl zugeordnet. Mit dieser Einheit 50 kann in groben Stufen die Grundleistung für den Transformator 1, 2, 10 vorgegeben werden und zwar über Relais oder Schütze oder Halbleiteschalter 101 bis 104, die an die Primärwicklung 5 angeschaltet sind. Die Einheit zur Stufenauswahl 50 wird über eine Einrichtung 60 mit digitaler oder analoger Ansteuereinheit 61 und zugehöriger Sollwerteinheit 62 aktiviert. Beide Einheiten 61 und 62 können von einem Standardbussystem angesteuert sein. Es ist aber auch eine Einzeldrahtansteuerung möglich.

Während also die Grundspannung für die Primärseite nach Maßgabe der Stufenauswahleinheit 50 vorgegeben ist und je nach Bedarf beispielsweise etwa 90 % der Basisleistung realisiert, werden etwa 10 % der Leistung zugeregelt und auf eine Teilwicklung 6 auf der Primärseite des Aufspanntransformators 1, 2, 10 aufgeschaltet. Dazu wird der Istwert vom Istwertgeber 40 auf eine Einheit 70 gegeben. Istwert der Einheit 70 und Sollwert der Einheit 62. werden einem Istwert/Sollwertvergleich unterzogen und gelangen zusammen in ein Schaltregler-modul 80. Nach Maßgabe des Istwert/Sollwertvergleiches erzeugt beispielsweise das Schaltregler-Modul 80 Steuerimpulse, welche über eine Transistorschaltung 90 dem Primärkreis 1 an der Teilspule 6 aufgeschaltet werden.

Die Transistorschaltung 90 kann im einzelnen z.B. aus MOS-FETs oder auch bipolaren Transistoren bestehen. Es sind beispielshaft Transistoren 91 und 92 und Sperrdioden 93 und 94 angedeutet. Eine Transistorschaltung kann vorteilhaft deshalb verwendet werden, weil bei der Schaltung gemäß Figur 1 nur vergleichsweise geringe Leistungen auszuregeln sind. Schaltmodul 80 und Transistorschaltung 90 können durch einen handelsüblichen Regler mit Transistorschaltung ersetzt werden.

Die anhand Figur 1 beschiebene Schaltung ist Teil einer Komplettanlage für die Flugfeldbefeuerung, die weiterhin ein Diagnosegerät, insbesondere Einheiten zur Lampen-Ausfall-Meldung (sog. LAM-Modul) und zur Isolations-Messung (sog. ISO-Modul) beinhalten können. Derartige Module sind im Prinzip vom Stand der Technik vorbekannt.

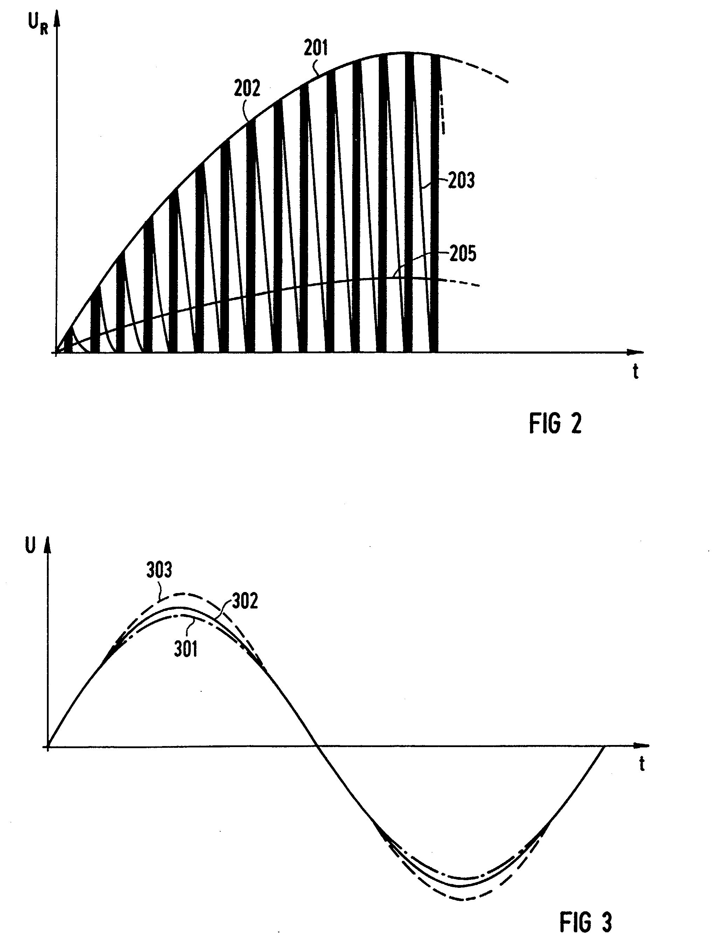

In Figur 2 sind im Ausschnitt die Teilspannungsverläufe dargestellt. Im einzelnen zeigt 201 als Umhüllende die Eingangsspannung für den Aufspanntransformator 1, 2, 10. Dabei liegt die Spannung 202 an der Transistorschaltung 90 nach Maßgabe des Schaltmoduls 80 jeweils als amplitudenmodulierte Impulse vor. Bei Verwendung einer Drossel wurden die Spannungspulse 202 jeweils entsprechend den Signalen 203 verschliffen. Sekundärseitig ergibt sich dann eine Ausgangsspannung entsprechend der Umhüllenden 205.

Aus Figur 3 lassen sich Aussagen zur Betriebsweise der Schaltung gemäß Figur 1 ableiten: Die Kurve 301 zeigt die Grundspannung, der entsprechend Kurve 302 eine Ausgangsspannung bei U_{N} aufgesetzt ist. Sofern Unterspannung in der Größenordnung von beispielsweise 15 % oder Lampenausfall vorliegt, erhöht sich die Spannung entsprechend der Kurve 303. Bei Überspannung oder Ausfall des Reglers ergibt sich der Verlauf entsprechend der ursprünglichen Kurve 301.

Mit der beschriebenen Anordnung ist eine Signalübertragung vorteilhafterweise in der Nähe des Nulldurchganges der Spannung möglich. Dies gilt insbesondere für das LAM-Modul oder für sonstige Arten von Schalthandlungen. Besonders vorteilhaft ist, daß nicht der bisher bei Thyristor-Anschnittsteuerungen übliche lückende Strom, sondern-immer in der Nähe des Nulldurchganges-ein sinus- oder zumindest sinusähnlicher Strom entsteht.

Durch den definierten Nulldurchgang lassen sich Daten störungsfreier als bisher übertragen. Wie bereits erwähnt, können bei Anlagen zur Flugplatzbefeuerung diese Datenanformationen über Lampenausfall sowie über Einzel- oder Gruppenschalthandlungen für die einzelnen Befeuerungsgeräte der Anlage beinhalten. Insbesonder bei einem verbesserten Rollführungssystem findet eine solche Datenübertragung Anwendung. Bisher erfolgte dies über ein separates Bussystem, das nunmehr eingespart werden kann.

## Patentansprüche

1. Anlage zur Flugplatzbefeuerung, enthaltend einen Konstantstromregler mit Aufspanntransformator (1, 2, 10) mit Einheiten zur Sollwertvorgabe (62), Istwerterfassung (40,70) sowie zum Istwert-/Sollwertvergleich, wobei der Primärseite des Aufspanntransformators (1, 2, 10) eine Einheit (50) zur Auswahl einer Basisspannung zugeordnet ist, **dadurch gekennzeichnet**, daß mittels einer primären Teilwicklung (6) des Aufspanntransformators (1, 2, 10) oder eines separaten Transformators mit Primär- und Sekundärwicklung eine auf die Basisspannung aufgesetzte Leistung erzeugt wird und daß ein Schaltreglermodul (80) nur die auf die Basisspannung aufgesetzte Leistung regelt, wozu das Schaltreglermodul (80) über eine Transistorschaltung (90) die primäre Teilwicklung (6) des Aufspanntransformators (1, 2, 10) oder die primäre wicklung des separaten Transformators mit Primär- und Sekundärwicklung ansteuert.

2. Konstantstromregler nach Anspruch 1, **dadurch gekennzeichnet**, daß die Basisspannung etwa 90 % und die darauf aufgesetzte Regelspannung etwa 10 % der geforderten Leistung umfassen.

3. Konstantstromregler nach Anspruch 1, **dadurch gekennzeichnet**, daß die Einheit zur Sollwertvorgabe (62) gleichermaßen eine Einheit zur Stufengrobauswahl (50) für die Basisspannung aktiviert.

4. Konstantstromregler nach Anspruch 1, **dadurch gekennzeichnet**, daß die Einheit zur Istwerterfassung ein analoger Stromwandler (41, 42) ist.

5. Konstantstromregler nach Anspruch 4, **dadurch gekennzeichnet**, daß dem analogen Stromwandler (41, 42) mit zugehörigem Widerstand ein A/D-Wandler (45, 46) nachgeschaltet ist, um den Istwert digital zu übertragen.

6. Konstantstromregler nach Anspruch 1, **dadurch gekennzeichnet**, daß die Mittel zum Istwert/Sollwertvergleich digitale Schaltmittel sind.

7. Konstantstromregler nach Anspruch 1, **dadurch gekennzeichnet**, daß die Transistorschaltung (90) aus MOS-FETs (91, 92) mit zugehörigen Sperrdioden (93, 94) besteht.

8. Konstantstromregler nach Anspruch 7, **dadurch gekennzeichet**, daß die Transistorschaltung (90) bipolare Transistoren mit zugehöriger Beschaltung enthält.

9. Konstantstromregler nach einem der Ansprüche 1 bis 8, **dadurch gekennzeichnet**, daß das Schaltreglermodul (80) und die zugehörige Transistorschaltung (90) einen handelsüblichen Regler bilden, der die primäre Teilwicklung (6) des Aufspanntransformators (1, 2, 10) ansteuert.

10. Konstantstromregler nach Anspruch 1, **dadurch gekennzeichnet**, daß mittels des Aufspanntransformators (1, 2, 10) jeweils im Bereich des Nulldurchgangs der Spannung eine weitgehend störungsfreie Datenübertragung erfolgt.

## Claims

1. System for airport lighting, containing a constant-current regulator having a step-up transformer (1, 2, 10) having units for rated-value input (62), actual-value detection (40, 70) and also for actual value/rated value comparison, wherein a unit (50) for selecting a base voltage is associated with the primary side of the step-up transformer (1, 2, 10),
characterised in that power superimposed on the base voltage is generated by means of a partial primary winding (6) of the step-up transformer (1, 2, 10) or a separate transformer having a primary and a secondary winding, and in that a switched-mode regulator module (80) only regulates the power which is superimposed on the base voltage, for which purpose the switched-mode regulator module (80), by way of a transistor circuit arrangement (90), drives the partial primary winding (6) of the step-up transformer (1, 2, 10) or the primary winding of the separate transformer having a primary and a secondary winding.

2. Constant-current regulator according to claim 1, characterised in that the base voltage comprises approximately 90 % and the control voltage superimposed thereon comprises approximately 10 % of the required power.

3. Constant-current regulator according to claim 1, characterised in that the unit for rated-value input (62) in like manner activates a unit for coarse-step selection (50) for the base voltage.

4. Constant-current regulator according to claim 1, characterised in that the unit for actual-value detection is an analog current transformer (41, 42).

5. Constant-current regulator according to claim 4, characterised in that an A/D converter (45, 46) is connected downstream of the analog current transformer (41, 42) with an associated resistor in order to transmit the actual value digitally.

6. Constant-current regulator according to claim 1, characterised in that the means for actual value/rated value comparison are digital switching means.

7. Constant-current regulator according to claim 1, characterised in that the transistor circuit arrangement (90) consists of MOS-FET's (91, 92) with associated blocking diodes (93, 94).

8. Constant-current regulator according to claim 7, characterised in that the transistor circuit arrangement (90) contains bipolar transistors with associated circuit elements.

9. Constant-current regulator according to one of the claims 1 to 8, characterised in that the switched-mode regulator module (80) and the associated transistor circuit arrangement (90) constitute a commercially available regulator which drives the partial primary winding (6) of the step-up transformer (1, 2, 10).

10. Constant-current regulator according to claim 1, characterised in that a data transfer which is largely interference-free is effected by means of the step-up transformer (1, 2, 10) in each case in the range of the zero crossing of the voltage.

## Revendications

1. Installation de balisage de terrains d'aviation, comprenant un régulateur de courant constant à transformateur élévateur (1, 2, 10) comportant des unités de prescription (62) d'une valeur de consigne, de détection (40, 70) de valeur réelle ainsi que de comparaison valeur réelle/valeur de consigne, une unité (50) de sélection d'une tension de base étant associée au côté primaire du transformateur élévateur (1, 2, 10), caractérisée en ce qu'une puissance portée à la tension de base est produite au moyen d'un enroulement partiel primaire (6) du transformateur élévateur (1, 2, 10) ou d'un transformateur distinct à enroulement primaire et enroulement secondaire, et un module (80) régulateur de commutation ne régule que la puissance portée à la tension de base, le module régulateur (80) de commutation commandant par l'intermédiaire d'un circuit (90) à transistors l'enroulement (6) primaire partiel du transformateur (1, 2, 10) élévateur ou l'enroulement primaire du transformateur distinct comportant un enroulement primaire et un enroulement secondaire.

2. Régulateur de courant constant suivant la revendication 1, caractérisé en ce que la tension de base comprend environ 90 % de la puissance exigée et la tension de régulation qui y est portée comprend environ 10 % de la puissance exigée.

3. Régulateur de courant constant suivant la revendication 1, caractérisé en ce que l'unité de prescription (62) de valeur de consigne active de la même manière une unité de sélection grossière par pas (50) pour la tension de base.

4. Régulateur de courant constant suivant la revendication 1, caractérisé en ce que l'unité de détection de valeur réelle est un convertisseur analogique de courant (41, 42).

5. Régulateur de courant constant suivant la revendication 4, caractérisé en ce qu'un convertisseur analogique/numérique (45, 46) est branché en aval du convertisseur (41, 42) analogique de courant à résistance associée, pour transmettre numériquement la valeur réelle.

6. Régulateur de courant constant suivant la revendication 1, caractérisé en ce que les moyens de comparaison valeur réelle/valeur de consigne sont des moyens de commutation numérique.

7. Régulateur de courant constant suivant la revendication 1, caractérisé en ce que le circuit (90) à transistors est constitué de transistors à effet de champ MOS (91, 92) à diodes de blocage associées (93, 94).

8. Régulateur de courant constant suivant la revendication 7, caractérisé en ce que le circuit (90) à transistors comprend des transistors bipolaires à montage associé.

9. Régulateur de courant constant suivant l'une des revendications 1 à 8, caractérisé en ce que le module (80) régulateur de commutation et le circuit (90) à transistors associé forment un régulateur courant dans le commerce, qui commande l'enroulement partiel primaire (6) du transformateur élévateur (1, 2, 10).

10. Régulateur de courant constant suivant la revendication 1, caractérisé en ce qu'une transmission de données dans une large mesure exempte de perturbations s'effectue au moyen du transformateur (1, 2, 10) élévateur dans la zone du passage par zéro de la tension.
